# EUROPÄISCHE PATENTSCHRIFT

(11) **EP 2 616 655 B1**
(45) Veröffentlichungstag und Bekanntmachung des Hinweises auf die Patenterteilung: **07.01.2015**
(21) Anmeldenummer: 11764122.5
(22) Anmeldetag: 07.09.2011
(51) Int. Cl.: F02D 41/22, F01M 13/00

(54) **VERFAHREN UND VORRICHTUNG ZUR DIAGNOSE EINER KURBELGEHÄUSEENTLÜFTUNG VON VERBRENNUNGSMOTOREN**
METHOD AND DEVICE FOR DIAGNOSING CRANKCASE VENTILATION OF INTERNAL COMBUSTION ENGINES
PROCÉDÉ ET DISPOSITIF DE DIAGNOSTIC D'UN DÉGAZAGE DE CARTER DE VILEBREQUIN DE MOTEURS À COMBUSTION INTERNE

(30) Priorität: 16.09.2010 DE 102010040900
(43) Veröffentlichungstag der Anmeldung: 24.07.2013
(73) Patentinhaber: Robert Bosch GmbH, 70442 Stuttgart (DE)
(72) Erfinder: KUHN, Daniel, 72124 Pliezhausen-Ruebgarten (DE); MICHAEL, Stefan, 71706 Markgroeningen (DE)
(86) Internationale Anmeldenummer: PCT/EP2011/065450
(87) Internationale Veröffentlichungsnummer: WO 2012/034907

(56) Entgegenhaltungen:
- DE-A1- 10 026 492
- DE-A1-102008 002 721
- DE-B3-102007 050 087
- US-A1- 2002 083 934

## Beschreibung

### Technisches Gebiet

Die vorliegende Erfindung betrifft Verbrennungsmotoren, bei denen das Kurbelgehäuse in ein Luftzuführungssystem entlüftet wird. Die Erfindung betrifft weiterhin ein Verfahren zur Diagnose des Entlüftungssystems des Verbrennungsmotors.

### Stand der Technik

In Verbrennungsmotoren kann es aufgrund von Leckageeffekten an den Zylinderwänden der Zylinder zu einem Austreten von Verbrennungsabgasen kommen. Diese Verbrennungsabgase sammeln sich in dem Kurbelgehäuse und werden in der Regel über eine Ölabscheideeinheit und eine Gasleitung, wie beispielsweise einen Schlauch, in das Luftzuführungssystem des Verbrennungsmotors entlüftet. Zur Einhaltung von Emissionsgrenzen der Emissionsgesetzgebung ist es notwendig, dass die Entlüftung des Kurbelgehäuses dahingehend überwacht wird, dass ein Defekt der Gasleitung zwischen dem Kurbelgehäuse und der Ölabscheideeinheit sowie zwischen der Ölabscheideeinheit und dem Luftzuführungssystem sicher über eine Diagnose erkannt wird.

Für die Diagnose der Funktionsfähigkeit der Entlüftung des Kurbelgehäuses gibt es verschiedene Konzepte. Zum einen können an den Gasleitungen zwischen Kurbelgehäuse und Ölabscheideeinheit sowie zwischen Ölabscheideeinheit und dem Luftzuführungssystem elektrische Kontakte vorgesehen werden, die bei einem Abfallen bzw. Trennen der Gasleitung geöffnet werden, so dass dadurch ein Fehler erkannt werden kann. Weiterhin kann eine Undichtigkeit in den Gasleitungen durch eine Plausibilisierung eines Luftmassensensors, der eingangsseitig des Luftzuführungssystems angeordnet ist, mit dem Ladedrucksensor durchgeführt werden. Hier besteht ein Nachteil darin, dass aufgrund von vielfältigen Möglichkeiten von Fehlern in dem Luftzuführungssystem kein eindeutiges Zuordnen einer Implausibilität zu einem Fehler der Gasleitung zur Entlüftung des Kurbelgehäuses möglich ist.

Eine weitere Möglichkeit besteht darin, einen Differenzdrucksensor zwischen dem Kurbelgehäuse und der Umgebung vorzusehen. Im intakten Zustand ist der Druck im Kurbelgehäuse geringer als der Umgebungsdruck, da im Luftzuführungssystem des Verbrennungsmotors über den Luftfilter ein Druckabfall erfolgt. Darüber hinaus verläuft die Öffnung der Gasleitung zur Entlüftung des Kurbelgehäuses in der Regel senkrecht zum Strömungsverlauf in dem Luftzuführungssystem, so dass ein Unterdruck in der Gasleitung zur Entlüftung aufgrund eines Venturi-Effekts erfolgt. Tritt ein Fehler an der Gasleitung zur Entlüftung des Kurbelgehäuses auf, so liegt im Kurbelgehäuse nahezu Umgebungsdruck vor. Mithilfe des Differenzdrucksensors kann ein Druckabfall zwischen dem Kurbelgehäuse und der Umgebung einer ordnungsgemäß funktionierenden Kurbelgehäuseentlüftung zugeordnet und in einer Diagnosefunktion ausgewertet werden.

Da die Druckunterschiede zwischen dem Kurbelgehäuse und dem Umgebungsdruck in der Regel sehr gering sind, benötigt man zur Realisierung der Diagnosefunktion einen Differenzdrucksensor mit sehr kleinen Toleranzen und unter Umständen Betriebspunkte, in denen in dem Luftzuführungssystem ein hoher Luftmassenstrom vorliegt, um eine Differenzierung zwischen ordnungsgemäß funktionierender oder nicht funktionierender Entlüftung vorzunehmen.

Die Druckschrift DE 100 26 492 A1 offenbart ein Verfahren zur Funktionsdiagnose eines Entlüftungssystems eines Kurbelgehäuses eines Verbrennungsmotors, bei dem in einer Entlüftungsleitung ein Taktventil angeordnet ist. Das Taktventil wird in Abhängigkeit vom Druck im Kurbelgehäuse gesteuert, der von einem Drucksensor erfasst wird. Bei hohem Druck wird das Taktventil geöffnet, um die Dämpfe über ein Saugrohr abfließen zu lassen. Die Steuerung des Taktventils erfolgt dabei in Abhängigkeit von Betriebs-, Abgasforderungen und/oder Lastzuständen. Anhand des Druckverlaufs ist erkennbar, ob beispielsweise der Ölstand ausreichend ist, eine Leckage im geschlossenen Entlüftungssystem vorliegt oder der Verbrennungsmotor einen erhöhten Verschleiß aufweist.

Es ist daher Aufgabe der vorliegenden Erfindung, ein Verfahren und eine Vorrichtung zur Überprüfung einer Funktion einer Entlüftung eines Kurbelgehäuses zur Verfügung zu stellen, das robust ist und mit einem Differenzdrucksensor mit geringeren Anforderungen an die Messtoleranz verwendet werden kann.

### Offenbarung der Erfindung

Diese Aufgabe wird durch das Verfahren zum Überprüfen der Funktion einer Entlüftung eines Kurbelgehäuses gemäß Anspruch 1 sowie durch die Vorrichtung und das Motorsystem gemäß den nebengeordneten Ansprüchen gelöst.

Weitere vorteilhafte Ausgestaltungen sind in den abhängigen Ansprüchen angegeben.

Gemäß einem ersten Aspekt ist ein Verfahren zum Überprüfen der Funktion einer Entlüftungsvorrichtung für die Entlüftung eines Kurbelgehäuses eines Verbrennungsmotors vorgesehen, wobei das Kurbelgehäuse über die Entlüftungsvorrichtung mit einem Luftzuführungssystem des Verbrennungsmotors verbunden ist. Das Verfahren umfasst die folgenden Schritte:
- Bestimmen einer Druckdifferenz zwischen einem Umgebungsdruck und einem Kurbelgehäusedruck im Kurbelgehäuse;
- Feststellen eines Fehlers in der Entlüftungsvorrichtung abhängig von der Druckdifferenz, wenn eine Freigabebedingung erfüllt ist;
wobei die Freigabebedingung erfüllt ist, wenn ein durch einen Tiefpassfilter gefilterter Luftmassenstrom in dem Luftzuführungssystem betragsmäßig einen ersten Schwellenwert übersteigt.

Eine Idee des obigen Verfahrens besteht darin, für die Durchführung der Diagnose der Entlüftungsvorrichtung die unterschiedliche Dynamik des Luftmassenstroms in dem Luftzuführungssystem und dem Differenzdruck zwischen Kurbelgehäuse und Umgebung zu berücksichtigen. Die dem Verfahren zugrunde liegende Diagnosefunktion, bei der die ordnungsgemäße Funktion der Entlüftungsvorrichtung überprüft wird, wird nur dann freigegeben, wenn ein entsprechend hoher Differenzdruck erwartet wird.

Durch das obige Verfahren kann die Robustheit der Diagnose erhöht werden und/oder es kann ein Differenzdrucksensor verwendet werden, bei dem geringere Anforderungen an die Toleranzen gestellt werden.

Weiterhin kann die Tiefpassfilterung des Luftmassenstroms mit einer Zeitkonstante durchgeführt werden, die so vorgegeben ist, dass sie gleich oder größer einer Zeitkonstante ist, die sich aus einem zeitverzögerten Ansprechen des Kurbelgehäusedrucks bei einer Änderung des Luftmassenstroms ergibt.

Gemäß einer Ausführungsform kann der Fehler in der Entlüftungsvorrichtung abhängig von der Druckdifferenz mit Hilfe eines Schwellenwertvergleichs festgestellt werden.

Insbesondere kann der Fehler in der Entlüftungsvorrichtung abhängig von einer durch einen weiteren Tiefpassfilter entprellten Druckdifferenz mit Hilfe des Schwellenwertvergleichs festgestellt werden.

Es kann vorgesehen sein, dass der weitere Tiefpassfilter eine Zeitkonstante aufweist, die von dem Luftmassenstrom, insbesondere von dem gefilterten Luftmassenstrom abhängig ist, insbesondere linear von dem Luftmassenstrom bzw. dem gefilterten Luftmassenstrom abhängt. Durch die betriebspunktabhängige Filterung des gemessenen Differenzdrucks zwischen dem Kurbelgehäuse und dem Umgebungsdruck können die Freigabegrenzen angehoben werden, wodurch eine Freigabehäufigkeit gewährleistet wird.

Der Schwellenwertvergleich kann bezüglich eines Druckdifferenzschwellenwerts durchgeführt werden, wobei der Druckdifferenzschwellenwert von dem gefilterten Luftmassenstrom abhängt.

Gemäß einem weiteren Aspekt ist eine Vorrichtung zum Überprüfen der Funktion einer Entlüftungsvorrichtung für die Entlüftung eines Kurbelgehäuses eines Verbrennungsmotors, wobei das Kurbelgehäuse über die Entlüftungsvorrichtung mit einem Luftzuführungssystem des Verbrennungsmotors verbunden ist, wobei die Vorrichtung ausgebildet ist, um
- eine Druckdifferenz zwischen einem Umgebungsdruck und einem Kurbelgehäusedruck im Kurbelgehäuse zu bestimmen; und
- einen Fehler in der Entlüftungsvorrichtung abhängig von der Druckdifferenz festzustellen, wenn eine Freigabebedingung erfüllt ist;
wobei die Freigabebedingung erfüllt ist, wenn ein durch einen Tiefpassfilter gefilterter Luftmassenstrom in dem Luftzuführungssystem betragsmäßig einen ersten Schwellenwert übersteigt.

Gemäß einem weiteren Aspekt ist ein Motorsystem mit einem Verbrennungsmotor, bei dem eine Entlüftungsvorrichtung für die Entlüftung eines Kurbelgehäuses eines Verbrennungsmotors vorgesehen und das Kurbelgehäuse über die Entlüftungsvorrichtung mit einem Luftzuführungssystem des Verbrennungsmotors verbunden ist, und mit der obigen Vorrichtung.

Gemäß einem weiteren Aspekt ist ein Computerprogrammprodukt vorgesehen, das einen Programmcode enthält, der, wenn er auf einer Datenverarbeitungseinheit ausgeführt wird, das obige Verfahren durchführt.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung eines Motorsystems mit einer Entlüftungsvorrichtung zwischen dem Kurbelgehäuse und dem Luftzuführungssystem;
- Figur 2: ein Funktionsdiagramm zur Veranschaulichung des Verfahrens zur Überprüfung der Funktion der Kurbelgehäuseentlüftung;
- Figur 3: zeitliche Verläufe des Luftmassenstroms in einem Luftzuführungssystem und des resultierenden Differenzdrucks in dem Kurbelgehäuse an einem Beispiel;
- Figuren 4a und 4b: ein Diagramm zur Darstellung von Differenzdrücken über dem Luftmassenstrom in dem Luftzuführungssystem bei ungefiltertem Luftmassenstrom und gefiltertem Luftmassenstrom für verschiedene Betriebspunkte des Verbrennungsmotors; und

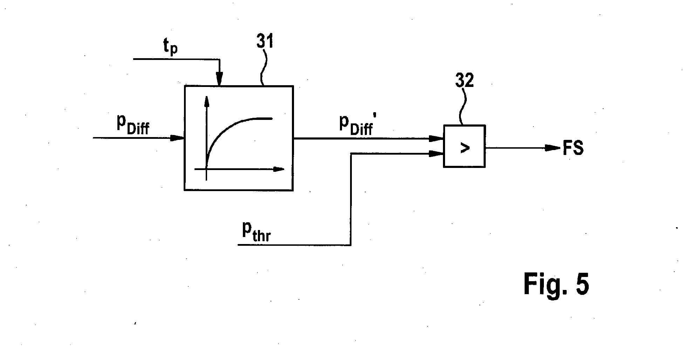

- Figur 5: ein Funktionsdiagramm zur Darstellung einer bereichs- bzw. betriebspunktabhängigen Filterung des gemessenen Differenzdrucks zum Feststellen der Funktion der Kurbelgehäuseentlüftung.

### Beschreibung von Ausführungsformen

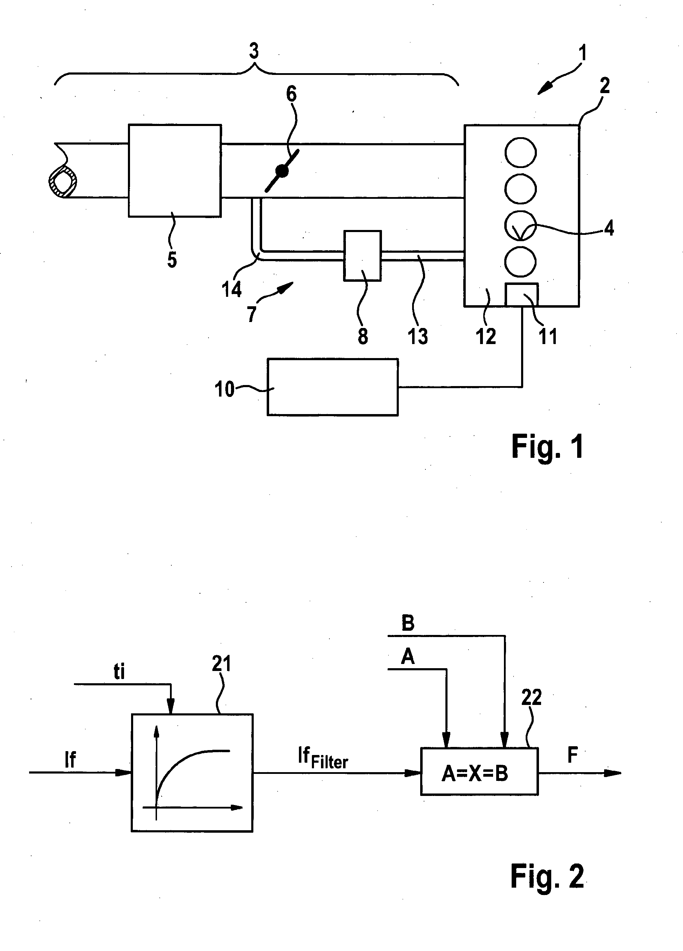

Figur 1 zeigt eine Blockdarstellung eines Motorsystems 1 mit einem Verbrennungsmotor 2, dem Luft über ein Luftzuführungssystem 3 mit einem Luftkanal zugeführt wird. Die über das Luftzuführungssystem 3 zugeführte Luft wird über (nicht gezeigte) Einlassventile gesteuert in Zylinder 4 des Verbrennungsmotors 2 eingelassen. Das Luftzuführungssystem 3 weist eingangsseitig einen Luftfilter 5 auf, um die angesaugte Frischluft von Partikeln zu filtern. Weiterhin weist das Luftzuführungssystem 3 eine Drosselklappe 6 auf, die den den Zylindern 4 des Verbrennungsmotors 2 zugeführten Luftstrom steuert.

Der Verbrennungsmotor 2 ist in einem Motorblock angeordnet, der einen Bereich 12 umschließt, in dem die Kurbelwelle angeordnet und mit Kolben in den Zylindern 4 verbunden ist. Dieser Bereich 12 wird Kurbelgehäuse genannt. Durch Leckageeffekte an den Zylinderwänden werden dem Kurbelgehäuse 12 so genannte Blow-by-Gase zugeführt, die sich im Inneren des Kurbelgehäuses 12 sammeln. Um zu vermeiden, dass die in dem Kurbelgehäuse 12 befindlichen Gase in die Umgebung gelangen, ist eine Entlüftungsvorrichtung 7 vorgesehen, die das Kurbelgehäuse 12 mit dem Luftzuführungssystem 3 verbindet.

Die Entlüftungsvorrichtung 7 umfasst einen ersten Entlüftungsleitungsabschnitt 13 und einen zweiten Entlüftungsleitungsabschnitt 14, die durch eine Ölabscheideeinheit 8 voneinander getrennt sind. Der erste Entlüftungsleitungsabschnitt 13 verbindet das Kurbelgehäuse 12 mit der Ölabscheideeinheit 8 und der zweite Entlüftungsleitungsabschnitt 14 verbindet die Ölabscheideeinheit 8 mit dem Luftzuführungssystem 3. Die Ölabscheideeinheit 8 dient zum Verhindern, dass bei einem Strömen von Gasen von dem Kurbelgehäuse 12 in das Luftzuführungssystem 3 Öl aus dem Kurbelgehäuse 12 mitgenommen wird und so in das Luftzuführungssystem 3 gelangt.

Damit sich in dem Kurbelgehäuse 12 ein permanenter Unterdruck einstellt, mündet der zweite Entlüftungsleitungsabschnitt 14 in einen Bereich des Luftzuführungssystems 3, in dem ein bezüglich des Umgebungsdrucks geringerer Druck vorherrscht. Dazu kann der zweite Entlüftungsleitungsabschnitt 14 beispielsweise ausgangsseitig des Luftfilters 5 in das Luftzuführungssystem 3 münden.

Zum Steuern des Betriebs des Verbrennungsmotors 2 ist eine Steuereinheit 10 vorgesehen, um den Betrieb des Verbrennungsmotors 2 zu steuern. Insbesondere steuert die Steuereinheit 10 die Drosselklappe 6 und weitere Stellgeber abhängig von gemessenen oder modellierten Systemzuständen so an, dass der Verbrennungsmotor 2 ein einem Sollmoment entsprechendes Antriebsmoment abgibt.

Zur Überprüfung der Funktion der einzelnen Komponenten des Motorsystems 1 sind in der Steuereinheit 10 (oder in einer sonstigen Überprüfungseinheit) in der Regel Diagnosefunktionen realisiert. Einer der Diagnosefunktionen sieht vor, mithilfe eines in dem Kurbelgehäuse 12 des Verbrennungsmotors 2 angeordneten Differenzdrucksensors 11 den Druckunterschied zwischen dem Umgebungsdruck und dem Druck im Kurbelgehäuse 12 (Kurbelgehäusedruck) zu messen und auszuwerten.

In der Regel wird die Differenz zwischen dem Kurbelgehäusedruck und dem Umgebungsdruck bezüglich eines Schwellenwerts ausgewertet, d. h. liegt der Differenzdruck unterhalb eines bestimmten Schwellenwerts, so wird ein Fehler in der Entlüftungsvorrichtung 7 erkannt. Solche Fehler können beispielsweise durch ein Abfallen eines der Entlüftungsleitungsabschnitte 13, 14 von dem Luftzuführungssystem 3, der Ölabscheideeinheit 8 bzw. von dem Kurbelgehäuse 12 auftreten. Weitere Fehlermöglichkeiten bestehen in einer Undichtigkeit eines der Entlüftungsleitungsabschnitte 13, 14 oder der Ölabscheideeinheit 8.

Da die Druckdifferenzen, die durch den Differenzdrucksensor 11 gemessen und in der Steuereinheit 10 ausgewertet werden, gering sind, ist es für die Robustheit der Funktionsüberprüfung notwendig, eine Freigabebedingung zu definieren, die gewährleistet, dass bei einer ordnungsgemäßen Funktion der Entlüftungsvorrichtung 7 eine ausreichende Druckdifferenz zwischen dem Kurbelgehäusedruck und dem Umgebungsdruck vorliegt. Die Freigabebedingung kann abhängig von einer Angabe des Luftmassenstroms durch das Luftzuführungssystem 3 definiert sein.

Der Luftdruck im Kurbelgehäuse 12 kann sich bei einer dynamischen Änderung der Zustände in dem Luftzuführungssystem 3, z. B. bei einer Änderung des Luftmassenstroms, zeitverzögert entsprechend dem Luftdruck an der Mündungsstelle des zweiten Entlüftungsleitungsabschnitts 14 einstellen. Dies kann unter Umständen dazu führen, dass eine auf dem Wert des Luftmassenstroms basierende Freigabebedingung die Funktion zum Überprüfen der ordnungsgemäßen Funktion der Entlüftungsvorrichtung 7 bereits aktiviert, bevor in dem Kurbelgehäuse 12 ein Gasdruck vorliegt, der zu einer ausreichend großen Druckdifferenz führt.

Die ermittelte Druckdifferenz zwischen dem Kurbelgehäusedruck und dem Umgebungsdruck wird mit einem Differenzdruckschwellenwert verglichen, um festzustellen, ob die Entlüftungsleitung 7 fehlerlos ist. Bei einem sprunghaften Ansteigen des Luftmassenstroms kann dies dazu führen, dass der gemessene Differenzdruck trotz ordnungsgemäß funktionierender Entlüftungsvorrichtung 7 nicht ausreichend hoch ist, obwohl die Freigabebedingung zur Freigabe der Diagnose erfüllt ist.

Fig. 2 zeigt das Ermitteln der Freigabedingung für die Diagnose der Entlüftungsvorrichtung 7. Es ist daher vorgesehen, eine Angabe über den Luftmassenstrom If (z.B. erhalten von einem Luftmassenstromsensor in dem Luftzuführungssystem) zunächst in einem Tiefpassfilterblock 21 gemäß einer Tiefpassfilterfunktion mit einer vorgegebenen Zeitkonstanten ti zu filtern, um eine Angabe eines gefilterten Luftmassenstroms If_{Filter} zu erhalten. Der gefilterte Luftmassenstrom If_{Filter} wird einem Schwellenwertvergleich in einem Schwellenwertblock 22 unterzogen wird, um das Vorliegen oder Nichtvorliegen einer Freigabebedingung zu überprüfen. Die vorgegebene Zeitkonstante ti der Tiefpassfilterung ist vorzugsweise so gewählt, dass sie im Wesentlichen einer Zeitkonstanten entspricht, mit der sich eine Änderung des Luftmassenstroms auf eine Änderung des Drucks im Kurbelgehäuse 12 auswirkt, oder größer als diese ist.

Letztlich wird die Überprüfung der ordnungsgemäßen Funktion der Entlüftungsvorrichtung 7 freigegeben, wenn der gefilterte Luftmassenstrom If_{Filter} einen vorgegebenen ersten Schwellenwert A übersteigt. Es kann zusätzlich vorgesehen sein, die Überprüfung der Funktion zu deaktivieren, wenn der gefilterte Luftmassenstrom einen zweiten, größeren Schwellenwert B übersteigt.

Die durch den Tiefpassfilterblock 21 nachgebildete Dynamik sollen Speichereffekte in der Entlüftungsvorrichtung 7 sowie im Volumen des Bereichs des Luftzuführungssystems 3, in den der zweite Entlüftungsleitungsabschnitt 14 mündet, nachgebildet werden.

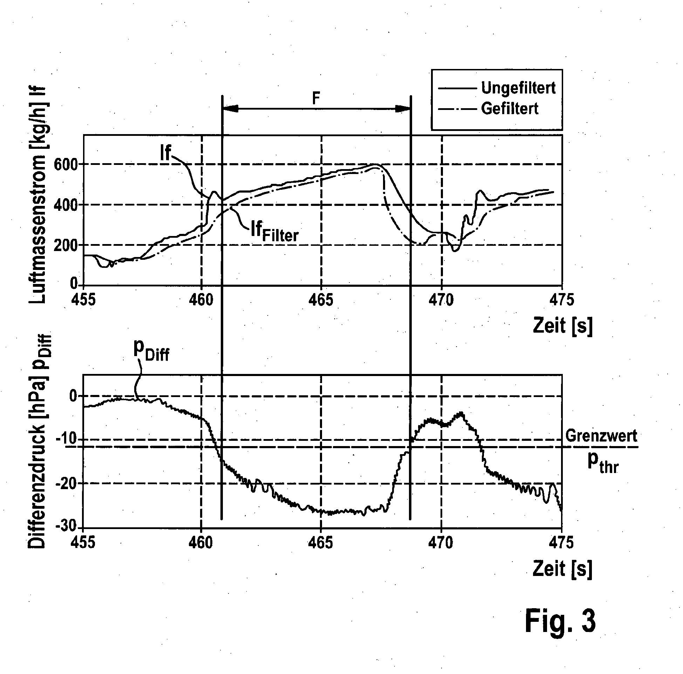

In den Diagrammen der Figur 3 ist dies an einem Beispiel dargestellt. Die Diagramme der Figur 3 zeigen die zeitlichen Verläufe des Luftmassenstroms If und den entsprechenden Differenzdruck p_{Diff} im Kurbelgehäuse 12. Im gezeigten Beispiel wird die Überprüfung der Funktion der Kurbelgehäuseentlüftung freigegeben, sobald der gefilterte Luftmassenstrom 370 kg/h übersteigt. Bezüglich dieses ersten Schwellenwerts A ist ein Differenzdruckschwellenwert von -12 hPa definiert. Liegt der gemessene Differenzdruck betragsmäßig in einem Bereich >12 hPa, so kann auf eine ordnungsgemäße Funktion der Kurbelgehäuseentlüftung geschlossen werden.

Man erkennt, dass dieser Grenzwert beim ungefilterten Luftmassenstrom If früher erreicht werden würde und dass der entsprechende gemessene Differenzdruck p_{Diff} zu diesem Zeitpunkt betragsmäßig deutlich unter 10 hPa (kleiner -10 hPa), etwa bei 5 hPa liegen würde. Der Bereich, innerhalb dessen in diesem Falle eine Unterscheidung zwischen einer ordnungsgemäß oder nicht ordnungsgemäß funktionierenden Kurbelgehäuseentlüftung unterschieden werden müsste, betrüge dann zwischen 5 hPa und 0 hPa. Dies macht den Einsatz eines empfindlicheren Differenzdrucksensors 11 erforderlich.

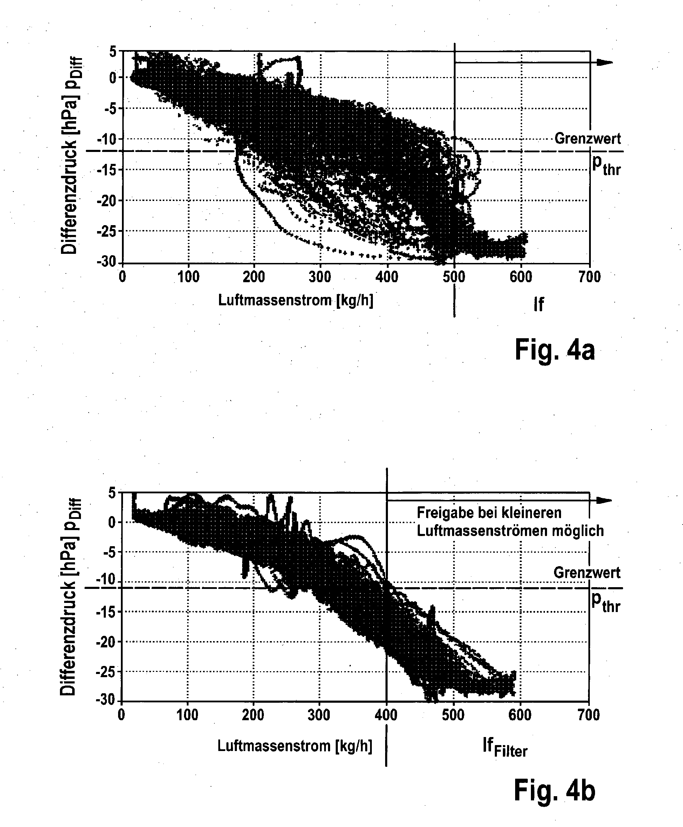

In den Figuren 4a und 4b ist anhand eines Diagramms, bei dem der Differenzdruck bezüglich des Luftmassenstroms aufgetragen ist, für verschieden Betriebspunkte, die in unterschiedlicher Weise angefahren werden, deutlich, dass bei Verwendung eines ungefilterten Luftmassenstroms If bei gleich bleibendem Differenzdruckschwellenwert pₜₕᵣ ein viel größerer Luftmassenstromschwellenwert als erster Schwellenwert A für die Freigabe angenommen werden muss als bei Verwendung des gefilterten Luftmassenstroms If_{Filter}.

Somit ist es möglich, bei Verwendung einer Filterung für den Luftmassenstrom If zur Bestimmung einer Freigabebedingung, den ersten Schwellenwert A so zu wählen, dass die Freigabebedingung häufiger erfüllt ist. Alternativ ist es möglich, bei gleichem erstem Schwellenwert A für den Luftmassenstrom einen Differenzdrucksensor 11 mit geringerer Empfindlichkeit vorzusehen, da beispielsweise bei einem ersten Schwellenwert A von 500 kg/h ein Differenzdruckschwellenwert pₜₕᵣ von ca. 19 hPa ausreichen würde.

Um einen robusten Messwert für den Differenzdruck p_{Diff} zwischen Kurbelgehäuse 12 und Umgebung zu erhalten, kann dieser in einem Differenzdrucktiefpassfilter 31 mit einem Tiefpass gefiltert werden. Die Zeitkonstante tₚ bei dem Differenzdrucktiefpassfilter 31 kann abhängig von dem gefilterten Luftmassenstrom If_{Filter} gewählt werden. Die Funktion, gemäß der die Zeitkonstante tₚ gewählt wird, kann vorsehen, dass bei kleinen Massenströmen (Massenströme kleiner als erste Luftmassenstromschwellenwert), in denen Unterscheidbarkeit zwar vorhanden, jedoch noch nicht optimal ist, größere Zeitkonstanten vorgesehen werden können als bei größeren Massenströmen. Eine solche Differenzdrucktiefpassfilterung dient einer betriebspunktabhängigen Entprellung des Messwerts des Differenzdrucks p_{Diff}.

Der entprellte Differenzdruck p_{Diff}' kann nun einem Schwellenwertvergleich in einem weiteren Schwellenwertblock 32 unterzogen werden, bei dem der entprellte Differenzdruck p_{Diff}' mit dem Differenzdruckschwellenwert pₜₕᵣ verglichen wird, um eine Angabe über die ordnungsgemäße oder nicht ordnungsgemäße Funktion der Überprüfung der Kurbelgehäuseentlüftung in Form eines Fehlersignals FS zu erhalten. Unterschreitet der entprellte Differenzdruck p_{Diff}' betragsmäßig den Differenzdruckschwellenwert pₜₕᵣ, bzw. überschreitet der entprellte Differenzdruck p_{Diff}' den Differenzdruckschwellenwert pₜₕᵣ so kann auf eine nicht ordnungsgemäße Funktion der Kurbelgehäuseentlüftung geschlossen werden und umgekehrt.

Der Differenzdruckschwellenwert pₜₕᵣ kann, wie oben beschrieben, konstant oder als Funktion des gefilterten Luftmassenstroms If_{Filter} bzw. weiterhin als Funktion eines Ladedrucks (bei einem aufgeladenen Verbrennungsmotor) ermittelt werden. Insbesondere ist es möglich, angesichts der Messwerte der Figur 4b, den Differenzdruckschwellenwert pₜₕᵣ an dem oberen Grenzbereich der in Figur 4b dargestellten Betriebspunkt auszurichten. Beispielsweise kann der Differenzdruckschwellenwert pₜₕᵣ gemäß einer linearen Funktion mit negativer Steigung bezüglich des gefilterten Luftmassenstroms If_{Filter} gewählt werden. Für die Beispiele der Figur 4b kann dies bedeuten, dass bei einem Luftmassenstrom von 550 kg/h ein Differenzdruckschwellenwert von -22 hPa und für einen Luftmassenstrom von 400 kg/h ein Differenzdruckschwellenwert von -10 hPa gewählt werden kann.

Durch die Entprellung des Differenzdrucks p_{Diff} über einen größeren Freigabezeitund Betriebsbereich können Störungen aufgrund von Einflüssen des Systems, Punkt-zu-Punkt-Strömungen und dergleichen minimiert werden. Weiterhin kann vorgesehen werden, dass der Schwellenwertvergleich des entprellten (gefilterten) Differenzdrucks p_{Diff}' bezüglich des Differenzdruckschwellenwerts pₜₕᵣ erst dann freigegeben wird, wenn eine kumulierte Freigabezeitdauer überschritten ist, die einer kumulierten Zeitdauer entspricht, während der die Freigabebedingung für die Überprüfung der Funktion der Kurbelgehäuseentlüftung vorgelegen hat.

## Patentansprüche

1. Verfahren zum Überprüfen der Funktion einer Entlüftungsvorrichtung für die Entlüftung eines Kurbelgehäuses (12) eines Verbrennungsmotors (2), wobei das Kurbelgehäuse (12) über die Entlüftungsvorrichtung (7) mit einem Luftzuführungssystem (3) des Verbrennungsmotors (2) verbunden ist, mit folgenden Schritten:
- Bestimmen einer Druckdifferenz (p_{Diff}) zwischen einem Umgebungsdruck und einem Kurbelgehäusedruck im Kurbelgehäuse (12);
- Feststellen eines Fehlers in der Entlüftungsvorrichtung abhängig von der Druckdifferenz, wenn eine Freigabebedingung erfüllt ist;
**dadurch gekennzeichnet, dass**
die Freigabebedingung erfüllt ist, wenn ein durch einen Tiefpassfilter (21) gefilterter Luftmassenstrom in dem Luftzuführungssystem (3) betragsmäßig einen ersten Schwellenwert übersteigt.

2. Verfahren nach Anspruch 1, wobei die Tiefpassfilterung des Luftmassenstroms mit einer Zeitkonstante durchgeführt wird, die so vorgegeben ist, dass sie gleich oder größer einer Zeitkonstante ist, die sich aus einem zeitverzögerten Ansprechen des Kurbelgehäusedrucks bei einer Änderung des Luftmassenstroms ergibt.

3. Verfahren nach einem der Ansprüche 1 bis 2, wobei der Fehler in der Entlüftungsvorrichtung (7) abhängig von der Druckdifferenz (p_{Diff}) mit Hilfe eines Schwellenwertvergleichs festgestellt wird.

4. Verfahren nach Anspruch 3, wobei der Fehler in der Entlüftungsvorrichtung (7) abhängig von einer durch einen weiteren Tiefpassfilter entprellten Druckdifferenz (p_{Diff}) mit Hilfe des Schwellenwertvergleichs festgestellt wird.

5. Verfahren nach Anspruch 4, wobei der weitere Tiefpassfilter eine Zeitkonstante aufweist, die von dem Luftmassenstrom, insbesondere von dem gefilterten Luftmassenstrom abhängig ist, insbesondere linear von dem Luftmassenstrom bzw. dem gefilterten Luftmassenstrom abhängt.

6. Verfahren nach einem der Ansprüche 3 bis 5, wobei der Schwellenwertvergleich bezüglich eines Druckdifferenzschwellenwerts (pₜₕᵣ) durchgeführt wird, wobei der Druckdifferenzschwellenwert (pₜₕᵣ) von dem gefilterten Luftmassenstrom abhängt.

7. Vorrichtung zum Überprüfen der Funktion einer Entlüftungsvorrichtung (7) für die Entlüftung eines Kurbelgehäuses (12) eines Verbrennungsmotors (2), wobei das Kurbelgehäuse (12) über die Entlüftungsvorrichtung (7) mit einem Luftzuführungssystem des Verbrennungsmotors (2) verbunden ist, wobei die Vorrichtung ausgebildet ist, um
- eine Druckdifferenz (p_{Diff}) zwischen einem Umgebungsdruck und einem Kurbelgehäusedruck im Kurbelgehäuse (12) zu bestimmen; und
- einen Fehler in der Entlüftungsvorrichtung (7) abhängig von der Druckdifferenz festzustellen, wenn eine Freigabebedingung erfüllt ist;
**dadurch gekennzeichnet, dass**
die Freigabebedingung erfüllt ist, wenn ein durch einen Tiefpassfilter (21) gefilterter Luftmassenstrom in dem Luftzuführungssystem (3) betragsmäßig einen ersten Schwellenwert übersteigt.

8. Motorsystem (1) mit einem Verbrennungsmotor (2), bei dem eine Entlüftungsvorrichtung (7) für die Entlüftung eines Kurbelgehäuses (12) eines Verbrennungsmotors (2) vorgesehen und das Kurbelgehäuse (12) über die Entlüftungsvorrichtung (7) mit einem Luftzuführungssystem (3) des Verbrennungsmotors (2) verbunden ist, und mit einer Vorrichtung nach Anspruch 7.

9. Computerprogrammprodukt, das einen Programmcode enthält, der, wenn er auf einer Datenverarbeitungseinheit ausgeführt wird, das Verfahren nach einem der Ansprüche 1 bis 6 durchführt.

## Claims

1. Method for diagnosing the function of a ventilating device for ventilating a crankcase (12) of an internal combustion engine (2), wherein the crankcase (12) is connected to an air supply system (3) of the internal combustion engine (2) via the ventilating device (7), comprising the following steps:
- determining a pressure difference (p_{Diff}) between an ambient pressure and a crankcase pressure in the crankcase (12);
- detecting an error in the ventilating device as a function of the pressure difference if a release condition is met;
**characterized in that**
the release condition is met if an air mass flow filtered, by a low-pass filter (21), in the air supply system (3) exceeds a first threshold value in terms of absolute value.

2. Method according to Claim 1, wherein the low-pass filtering of the air mass flow is carried out with a time constant which is predefined in such a way that it is equal to or greater than a time constant which is obtained from a time-delayed response of the crankcase pressure when the air mass flow changes.

3. Method according to one of Claims 1 to 2, wherein the fault in the ventilating device (7) is detected as a function of the pressure difference (p_{Diff}) using a pressure value comparison.

4. Method according to Claim 3, wherein the fault in the ventilating device (7) is detected as a function of a pressure difference (p_{Diff}), debounced by a further low-pass filter, using the threshold value comparison.

5. Method according to Claim 4, wherein the further low-pass filter has a time constant which is dependent on the air mass flow, in particular on the filtered air mass flow, in particular depends linearly on the air mass flow or the filtered air mass flow.

6. Method according to one of Claims 3 to 5, wherein the threshold value comparison is carried out with respect to a pressure difference threshold value (pₜₕᵣ), wherein the pressure difference threshold value (pₜₕᵣ) depends on the filtered air mass flow.

7. Method for checking the function of a ventilating device (7) for ventilating a crankcase (12) of an internal combustion engine (2), wherein the crankcase (12) is connected to an air supply system of the internal combustion engine (2) via the ventilating device (7), wherein the device is designed
- to determine a pressure difference (p_{Diff}) between an ambient pressure and a crankcase pressure in the crankcase (12); and
- to detect a fault in the ventilating device (7) as a function of the pressure difference if a release condition is met;
**characterized in that**
the release condition is met if an air mass flow, filtered by a low-pass filter (21), in the air supply system (3) exceeds a first threshold value in terms of absolute value.

8. Engine system (1) having an internal combustion engine (2) in which a ventilating device (7) for ventilating a crankcase (12) of an internal combustion engine (2) is provided, and the crankcase (12) is connected to an air supply system (3) of the internal combustion engine (2) via the ventilating device (7), and having a device according to Claim 7.

9. Computer programme product which contains a programme code which, when it is executed on a data processing unit, carries out the method according to one of Claims 1 to 6.

## Revendications

1. Procédé pour contrôler le fonctionnement d'un dispositif de dégazage pour le dégazage d'un carter de vilebrequin (12) d'un moteur à combustion interne (2), le carter de vilebrequin (12) étant connecté par le biais du dispositif de dégazage (7) à un système d'alimentation en air (3) du moteur à combustion interne (2), comprenant les étapes suivantes :
- détermination d'une différence de pression (p_{Diff}) entre une pression ambiante et une pression de carter de vilebrequin dans le carter de vilebrequin (12) ;
- établissement d'une erreur dans le dispositif de dégazage en fonction de la différence de pression, lorsqu'une condition de libération est satisfaite ;
**caractérisé en ce que**
la condition de libération est satisfaite lorsqu'un débit volumique d'air filtré par un filtre passe-bas (21) dans le système d'alimentation en air (3) dépasse en valeur absolue une première valeur de seuil.

2. Procédé selon la revendication 1, dans lequel le filtrage passe-bas du débit volumique d'air est effectué avec une constante de temps qui est prédéfinie de telle sorte qu'elle soit supérieure ou égale à une constante de temps qui s'obtient à partir d'une réaction retardée dans le temps de la pression du carter de vilebrequin dans le cas d'une variation du débit volumique d'air.

3. Procédé selon l'une quelconque des revendications 1 et 2, dans lequel l'erreur dans le dispositif de dégazage (7) est établie en fonction de la différence de pression (p_{Diff}) à l'aide d'une comparaison de valeurs de seuil.

4. Procédé selon la revendication 3, dans lequel l'erreur dans le dispositif de dégazage (7) est établie en fonction d'une différence de pression (p_{Diff}) sans rebond à travers un autre filtre passe-bas, à l'aide de la comparaison des valeurs de seuil.

5. Procédé selon la revendication 4, dans lequel l'autre filtre passe-bas présente une constante de temps, qui dépend du débit volumique d'air, en particulier du débit volumique d'air filtré, en particulier dépend linéairement du débit volumique d'air ou du débit volumique d'air filtré.

6. Procédé selon l'une quelconque des revendications 3 à 5, dans lequel la comparaison des valeurs de seuil est effectuée en fonction d'une valeur de seuil de différence de pression (pₜₕᵣ), la valeur de seuil de différence de pression (pₜₕᵣ) dépendant du débit volumique d'air filtré.

7. Dispositif pour contrôler le fonctionnement d'un dispositif de dégazage (7) pour le dégazage d'un carter de vilebrequin (12) d'un moteur à combustion interne (2), le carter de vilebrequin (12) étant connecté par le biais du dispositif de dégazage (7) à un système d'alimentation en air du moteur à combustion interne (2), le dispositif étant réalisé
- pour déterminer une différence de pression (p_{Diff}) entre une pression ambiante et une pression de carter de vilebrequin dans le carter de vilebrequin (12) ; et
- pour établir une erreur dans le dispositif de dégazage (7) en fonction de la différence de pression lorsqu'une condition de libération est satisfaite ;
**caractérisé en ce que**
la condition de libération est satisfaite lorsqu'un débit volumique d'air filtré par un filtre passe-bas (21) dans le système d'alimentation en air (3) dépasse en valeur absolue une première valeur de seuil.

8. Système de moteur (1) comprenant un moteur à combustion interne (2), dans lequel un dispositif de dégazage (7) pour le dégazage d'un carter de vilebrequin (12) d'un moteur à combustion interne (2) est prévu et le carter de vilebrequin (12) est connecté par le biais du dispositif de dégazage (7) à un système d'alimentation en air (3) du moteur à combustion interne (2), et comprenant un dispositif selon la revendication 7.

9. Produit de programme informatique contenant un code programme qui, lorsqu'il est exécuté sur une unité de traitement de données, met en oeuvre le procédé selon l'une quelconque des revendications 1 à 6.
